# FASCICULE DE BREVET EUROPEEN

(11) **EP 3 402 716 B1**
(45) Date de publication et mention de la délivrance du brevet: **15.04.2020**
(21) Numéro de dépôt: 17712182.9
(22) Date de dépôt: 09.01.2017
(51) Int. Cl.: B62K 23/06, B62L 3/02, B60T 7/10, B60T 11/04, B62K 9/00, G05G 1/04

(54) **DISPOSITIF DE FREINAGE POUR UN VÉHICULE COMPORTANT UN GUIDON ET UN CABLE DE FREIN**
FAHRZEUGBREMSSYSTEM MIT GRIFF UND BREMSKABEL
VEHICLE BRAKING SYSTEM COMPRISING A HANDLE AND A BRAKE CABLE

(30) Priorité: 12.01.2016 FR 1650230
(43) Date de publication de la demande: 21.11.2018
(73) Titulaire: Decathlon, 59650 Villeneuve d'Ascq (FR)
(72) Inventeur: PETITDEMANGE, David, 59710 Ennevelin (FR)
(74) Mandataire: Cabinet Beau de Loménie
(86) Numéro de dépôt international: PCT/FR2017/050043
(87) Numéro de publication internationale: WO 2017/121948

(56) Documents cités:
- WO-A2-90/14974
- FR-A1- 2 982 837
- JP-A- 2007 030 584

## Description

### Arrière-plan de l'invention

La présente invention concerne le domaine des véhicules, en particulier les véhicules à roues et notamment les cycles, par exemple les vélos.

Elle concerne plus précisément un dispositif de freinage d'un véhicule, en particulier un véhicule à roues ayant au moins un guidon ayant un axe et au moins un frein actionnable par un câble de frein ayant une tête.

On connaît des dispositifs de freinage comportant :
- un support présentant une première extrémité munie d'un manchon de fixation au guidon, le manchon de fixation ayant un axe, et une seconde extrémité ; et
- un corps pivotant monté au support de manière pivotante autour d'un axe de pivotement qui est sensiblement parallèle à l'axe du manchon de fixation, le corps pivotant comportant un levier de freinage s'étendant sensiblement parallèlement à l'axe du manchon de fixation ;

Le document EP2594469 décrit un tel dispositif de freinage, équipant des vélos pour enfants, dans lequel le corps pivotant comprend une cavité d'accueil pour la tête du câble de frein et le support est muni d'un organe de guidage de l'entrée du câble de frein dans le support, de sorte que l'actionnement du levier de freinage permet de tirer sur le câble de frein, ce qui provoque le freinage du véhicule. Ce dispositif permet notamment aux enfants ayant de petites mains de saisir le levier de freinage et d'appliquer aisément la force nécessaire au freinage.

En revanche, l'organe de guidage de ce type de dispositif de freinage s'étend depuis le support, sensiblement perpendiculairement à l'axe de pivotement, faisant saillie vers l'avant du véhicule. Aussi, l'organe de guidage s'avère encombrant et il est nécessaire d'en limiter les dimensions.

Par ailleurs, ce positionnement de l'organe de guidage implique que le câble de frein s'étend également vers l'avant du dispositif de freinage, ce qui est d'autant plus encombrant. Il existe notamment un risque que le câble de frein gêne l'utilisateur lorsqu'il actionne le levier de freinage.

### Objet et résumé de l'invention

Un objet de la présente invention est de proposer un dispositif de freinage, pour un véhicule comportant un guidon et un câble de frein, remédiant aux inconvénients cités précédemment et permettant notamment de réduire l'encombrement généré par l'organe de guidage et le câble de frein.

L'invention atteint son but par le fait que le corps pivotant comporte en outre un organe de guidage de l'entrée du câble de frein dans le corps pivotant, ledit organe de guidage s'étendant selon un axe transversal à un plan perpendiculaire à l'axe de pivotement, par le fait que la seconde extrémité du support comporte une cavité d'accueil pour la tête du câble de frein, et par le fait que l'organe de guidage et le levier de freinage s'étendent de part et d'autre du support.

Le manchon de fixation permet de fixer le support au guidon du vélo, de sorte que l'axe du manchon de fixation est confondu avec l'axe du guidon. De cette manière, le support est maintenu immobile par rapport au guidon. Contrairement aux dispositifs de l'art antérieur, dans le dispositif de freinage selon l'invention, la cavité d'accueil est ménagée dans le support tandis que l'organe de guidage est solidaire du corps pivotant. Dans cette configuration, le câble de frein entre dans le corps pivotant au niveau de l'organe de guidage et s'étend dans le corps pivotant tandis que la tête du câble de frein est maintenue immobile dans la cavité d'accueil ménagée dans le support.

Sans sortir du cadre de l'invention, le guidon peut être muni d'une poignée de préhension permettant à l'utilisateur de manipuler le guidon et ainsi diriger le véhicule.

De manière non limitative, le dispositif de freinage peut prendre au moins deux positions distinctes : une position de repos dans laquelle le levier de freinage n'est pas actionné, le corps pivotant étant disposé à proximité de la cavité d'accueil, et une position actionnée dans laquelle le levier de freinage est actionné, le corps pivotant étant pivoté de manière à être amené vers la première extrémité du support, et donc vers la poignée de préhension.

En particulier, le câble de frein est disposé dans une gaine dont une extrémité coopère avec l'organe de guidage, par exemple en étant logée dans l'organe de guidage. Aussi, lorsque le levier de freinage est actionné, le corps pivotant pivote autour de l'axe de pivotement, ce qui a pour effet de modifier la position de l'organe de guidage. Il s'ensuit que l'organe de guidage exerce une force de poussée sur la gaine, tandis que la tête du câble de frein est maintenue en place, ce qui conduit à déplacer le câble de frein par rapport à la gaine, en sortant le câble de ladite gaine, ce qui conduit audit freinage du véhicule.

Le levier de freinage est disposé parallèlement à l'axe du manchon de fixation et donc à l'axe du guidon, de sorte que la distance entre le levier de freinage et le guidon est sensiblement la même sur toute la longueur du levier de freinage. Les enfants ayant de petites mains peuvent donc saisir le levier de freinage sur toute sa longueur.

Par ailleurs, on comprend que l'axe de l'organe de guidage s'étend latéralement et non pas vers l'avant du véhicule comme on peut le voir dans l'art antérieur. Un intérêt est de réduire l'encombrement causé par l'organe de guidage.

Le levier de freinage et l'axe de pivotement sont sensiblement parallèles à l'axe du manchon de fixation, de sorte que le levier de freinage et l'axe de pivotement sont sensiblement parallèles entre eux. Par conséquent, le levier de freinage est également perpendiculaire audit plan perpendiculaire à l'axe de pivotement. L'axe de guidage et le levier de freinage sont donc tous les deux transversaux audit plan perpendiculaire à l'axe de pivotement.

Aussi, le fait que l'organe de guidage et le levier de freinage s'étendent de part et d'autre du support implique que le câble de frein et le levier de freinage s'étendent dans des directions opposées. Le câble de frein s'étend donc de l'autre côté du levier de freinage par rapport au plan perpendiculaire à l'axe de pivotement de sorte qu'il ne risque pas de gêner l'utilisateur, lorsqu'il actionne le levier de freinage.

De préférence, l'organe de guidage et le levier de freinage sont disposés de part et d'autre d'un plan perpendiculaire à l'axe du manchon de fixation et passant par la cavité d'accueil. L'intérêt est que la cavité d'accueil est disposée entre le levier de freinage et l'organe de guidage et que l'organe de guidage est disposé sensiblement transversalement par rapport à la cavité d'accueil.

De manière avantageuse, le support présente une portion coudée formée entre la première extrémité du support et la seconde extrémité du support, et la portion coudée est traversée par l'axe de pivotement.

On comprend que la portion coudée est agencée de manière que l'axe de pivotement soit situé au-dessus des premières phalanges de la main de l'utilisateur. Un intérêt est d'améliorer l'ergonomie du dispositif de freinage car la trajectoire du levier de freinage correspond au mouvement naturel des doigts lors du freinage, et notamment le mouvement des troisièmes phalanges.

Avantageusement, le support comprend une surface extérieure dans laquelle débouche la cavité d'accueil. On comprend que la tête du câble de frein est donc maintenue dans le support de sorte que le support exerce, sur la tête du câble de frein, une force dirigée vers l'extérieur du support. Autrement dit, la tête du câble de frein est maintenue dans la cavité d'accueil et est orientée dans une direction opposée au manchon de fixation.

Préférentiellement, le manchon de fixation et la cavité d'accueil sont disposés de part et d'autre d'un plan contenant l'axe de pivotement et traversant l'organe de guidage.

Selon un aspect particulièrement avantageux de l'invention, la cavité d'accueil est conformée de sorte que le câble de frein présente, entre la cavité d'accueil et l'organe de guidage, une courbure d'un angle supérieur à 90° dans le corps pivotant. La courbure est l'angle saillant qui est défini entre l'axe de l'organe de guidage et la direction du câble de frein en sortie de la cavité d'accueil. L'intérêt de cette courbure du câble de frein est de limiter les frottements du câble de frein dans le corps pivotant et ainsi de limiter l'effort à appliquer sur le levier de freinage afin de freiner le véhicule. On comprend que, selon cette configuration, la continuité de la courbure du câble de frein n'est pas brisée par un angle trop abrupt, ce qui permet de limiter les frottements entre le câble de frein et le corps pivotant et de faciliter le freinage.

De préférence, la cavité d'accueil comporte une paroi de fond ayant une forme partiellement cylindrique présentant un axe, la paroi de fond étant configurée pour recevoir la tête du câble de frein. Un intérêt est d'autoriser un pivotement de la tête du câble de frein selon l'axe de la paroi de fond de la cavité d'accueil. Ce pivotement de la tête du câble de frein permet de s'adapter au déplacement du câble de frein dans le corps pivotant.

En effet, lors de l'actionnement du levier de freinage, le corps pivotant pivote autour de l'axe de pivotement et le câble de frein est amené à glisser dans le corps pivotant. La tête du câble de frein pivote alors dans la cavité d'accueil de manière à s'adapter au mouvement du câble de frein. La paroi de fond ayant une forme partiellement cylindrique, elle permet à la tête du câble de frein de s'adapter au mouvement du câble de frein, ce qui limite les frottements et facilite encore le freinage.

De manière particulièrement avantageuse, l'axe de la paroi de fond de la cavité d'accueil est incliné par rapport à l'axe de pivotement, grâce à quoi la tête du câble de frein s'adapte plus efficacement au déplacement du câble dans le corps pivotant. En particulier, lors de l'actionnement du levier de freinage, le corps pivotant pivote autour de l'axe de pivotement tandis que la tête du câble de frein est maintenue en position dans la cavité d'accueil du support. Il résulte que le câble de frein est amené à glisser dans le corps pivotant. Grâce à l'inclinaison de l'axe de la paroi de fond de la cavité d'accueil par rapport à l'axe de pivotement, la tête du câble de frein pivote dans la cavité d'accueil de sorte que le câble de frein reste dans un plan passant par l'axe de la paroi de fond cylindrique, c'est-à-dire par l'axe de la tête du câble de frein. Un intérêt est d'éviter une torsion du câble de frein, ce qui facilite l'opération de freinage.

Avantageusement, considéré dans un plan perpendiculaire à l'axe de pivotement, l'organe de guidage est disposé entre l'axe de pivotement et l'axe du manchon de fixation.

De manière avantageuse, considéré dans ledit plan perpendiculaire à l'axe de pivotement, l'organe de guidage est disposé entre l'axe de pivotement et le levier de freinage.

En d'autres mots, considéré en projection dans le plan perpendiculaire à l'axe de pivotement, l'organe de guidage est compris dans un triangle formé par le manchon de fixation, l'axe de pivotement et le levier de freinage. Un intérêt est de confiner l'organe de guidage dans un volume délimité par ledit triangle et s'étendant le long du guidon du véhicule, ledit volume définissant sensiblement un prisme à base triangulaire. Cette configuration permet de réduire l'encombrement causé par l'organe de guidage et notamment d'éviter qu'il ne fasse saillie vers l'avant du véhicule. En particulier, cette configuration permet d'augmenter les dimensions de l'organe de guidage sans nuire à l'ergonomie du dispositif de freinage.

Préférentiellement, l'angle saillant entre l'axe de guidage et le plan perpendiculaire à l'axe de pivotement est compris entre 45° et 90°.

Considéré depuis le plan perpendiculaire à l'axe de pivotement, l'organe de guidage s'étend vers l'axe du manchon de fixation.

De préférence, l'organe de guidage comprend une molette de réglage de la tension du câble de frein. En plus de guider le câble dans le corps pivotant, l'organe de guidage permet donc de régler la tension du câble de frein. On limite ainsi le nombre de pièces nécessaires pour réaliser ces fonctions et on limite donc l'encombrement global du dispositif de freinage.

Encore de préférence, le corps pivotant comporte une gorge intérieure pour guider le câble de frein s'étendant entre la cavité d'accueil et l'organe de guidage. Là encore, lors de l'actionnement du levier de freinage, le corps pivotant pivote autour de l'axe de pivotement tandis que la tête du câble de frein est maintenue en position dans la cavité d'accueil du support. Il résulte que le câble est amené à glisser dans le corps pivotant. Un intérêt de la gorge intérieure est donc de guider le câble de frein dans le corps pivotant tout en favorisant le glissement du câble dans le corps pivotant. En particulier, de manière non limitative, la gorge intérieure peut comprendre une paroi latérale lisse configurée de sorte que le câble de frein glisse en appui tangentiel sur ladite paroi. On comprend que la gorge intérieure facilite le freinage en limitant les frottements entre le câble de frein et le corps pivotant, tout en guidant le câble de frein.

Avantageusement, la section transversale de ladite gorge intérieure est croissante depuis l'organe de guidage vers la cavité d'accueil. Un intérêt est d'améliorer le glissement du câble de frein dans le corps pivotant. Cette configuration permet notamment au câble de frein de glisser dans la gorge intérieure, dans une direction transversale à ladite gorge, du bas vers le haut. On comprend alors que le câble est guidé plus efficacement et que les frottements entre le câble de frein et la gorge intérieure sont encore réduits.

Préférentiellement, un ressort de rappel est monté entre le support et le corps pivotant, agencé de manière à ramener le dispositif de freinage en une position de repos lorsque le levier de freinage n'est pas actionné. Un intérêt est qu'il n'est pas nécessaire d'exercer une force sur le levier de freinage de manière à placer le dispositif de freinage en position de repos. En outre, le dispositif de freinage ne peut pas rester bloqué en position actionnée, ce qui empêcherait l'utilisation du véhicule.

L'invention porte également sur un véhicule à roues ayant au moins une roue fixée à un cadre comprenant un guidon et au moins un frein associé à ladite roue et actionnable par un câble de frein ayant une tête, ledit câble de frein étant disposé à l'intérieur d'une gaine, ledit véhicule comportant en outre un dispositif de freinage tel que décrit précédemment, le câble de frein traversant l'organe de guidage et la tête du câble de frein étant disposée dans la cavité d'accueil, une première extrémité de la gaine étant logée dans l'organe de guidage, tandis qu'une deuxième extrémité de la gaine est fixée au frein.

Sans sortir du cadre de l'invention, le véhicule peut être un vélo, un deux-roues motorisé ou encore une trottinette.

### Brève description des dessins

L'invention sera mieux comprise à la lecture de la description qui suit d'un mode de réalisation de l'invention donné à titre d'exemple non limitatif, en référence aux dessins annexés, sur lesquels :
- la figure **1** est une vue en perspective du dispositif de freinage selon l'invention, en position de repos ;
- la figure **2** représente le corps pivotant du dispositif de freinage selon l'invention ;
- la figure **3** est une vue de face du dispositif de freinage selon l'invention ;
- la figure **4** est une vue en perspective du dispositif de freinage selon l'invention, muni d'un câble de frein, en position de repos ;
- la figure **5** est une vue perspective du dispositif de freinage selon l'invention, muni d'un câble de frein, en position actionnée ;
- la figure **6** est une vue en coupe du dispositif de freinage selon l'invention, prise selon un plan perpendiculaire à l'axe de pivotement, ledit dispositif de freinage étant en position de repos ;
- la figure **7** est une vue en coupe du dispositif de freinage selon l'invention, prise selon un plan perpendiculaire à l'axe de pivotement, ledit dispositif de freinage étant en position actionnée ;
- la figure **8** est une vue en coupe, de dessous, en position de repos, illustrant le cheminement du câble de frein dans le corps pivotant ; et
- la figure **9** illustre un véhicule à roues comportant un dispositif de freinage selon l'invention.

### Description détaillée de l'invention

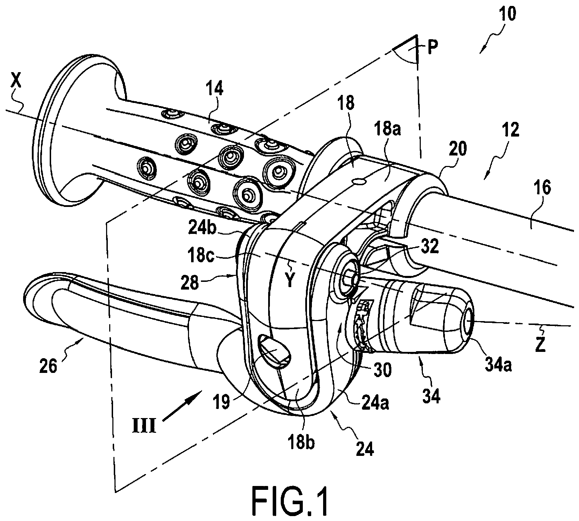

Sur la figure **1****,** on a représenté un dispositif de freinage **10** selon l'invention.

Ce dispositif de freinage **10** est destiné à être monté sur un véhicule à roues **100,** tel un cycle, qui comporte un guidon **12** muni d'au moins une poignée de préhension **14,** permettant à l'utilisateur de manipuler le guidon **12,** et au moins un frein actionnable par un câble de frein **C** ayant une première extrémité munie d'une tête de câble **Ca,** et une deuxième extrémité. De manière connue, le frein est destiné à freiner l'une des roues du véhicule **100.** Dans cet exemple, le dispositif de freinage **10** est fixé à un tube **16** du guidon **12,** ledit tube **16** ayant un axe et la poignée de préhension **14** étant fixée audit tube du guidon **12.**

Le dispositif de freinage comporte en outre un support qui présente une première extrémité **18a,** une seconde extrémité **18b,** opposée à la première extrémité **18a,** et une portion coudée **18c.** La première extrémité **18a** du support **18** est munie d'un manchon de fixation **20** permettant de fixer le dispositif de freinage au tube **16** du guidon **12.**

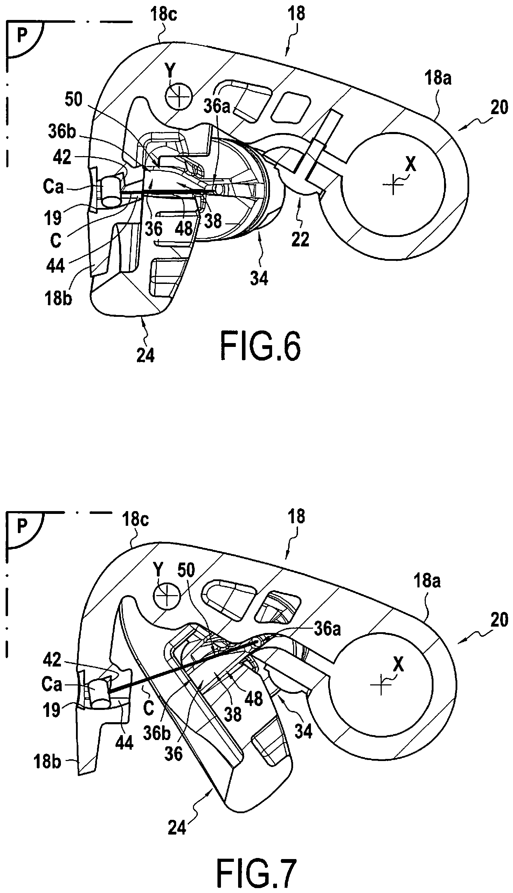

Comme on le constate sur la figure **6****,** le manchon de fixation est fendu et comprend un moyen de serrage **22.** Le manchon de fixation présente la forme générale d'un cylindre qui s'étend selon un axe **X.** Le manchon de fixation **20** est destiné à enserrer le tube **16** du guidon **12** du véhicule, de sorte que l'axe **X** du manchon de fixation **20** est confondu avec l'axe du tube **16** du guidon **12** et avec l'axe longitudinal de la poignée de préhension **14.** Sans sortir du cadre de l'invention, le support **18** pourrait être formé en une seule pièce avec le tube du guidon.

Toujours sur la figure **6****,** on constate que la portion coudée **18c** du support est située entre la première extrémité **18a** et la seconde extrémité **18b** du support **18.** En outre, la portion coudée **18c** forme approximativement un angle droit.

En se référant de nouveau à la figure **1****,** on remarque que, selon l'invention, la seconde extrémité **18b** du support **18** comporte une cavité d'accueil **19** pour la tête **Ca** du câble de frein **C.** Ladite cavité d'accueil **19** sera décrite plus en détail par la suite.

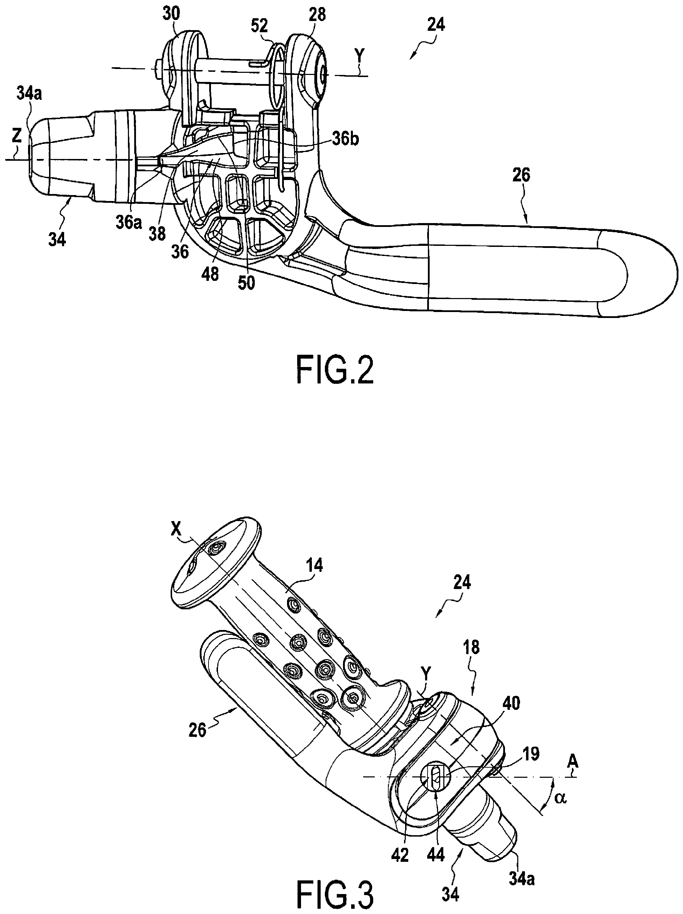

Conformément à l'invention, le dispositif de freinage **10** comporte en outre un corps pivotant **24,** illustré en figure **2****,** qui est monté pivotant par rapport au support autour d'un axe de pivotement **Y.** L'axe de pivotement **Y** est sensiblement parallèle à l'axe **X** du manchon de fixation **20** et donc à l'axe longitudinal de la poignée de préhension. Cet axe de pivotement **Y** est disposé dans la portion coudée **18c,** entre la première extrémité **18a** et la seconde extrémité **18b** du support **18.** En outre, l'axe de pivotement **Y** traverse la portion coudée **18c** du support **18.**

Le corps pivotant **24** comprend un levier de freinage **26** s'étendant sensiblement parallèlement à l'axe **X** du manchon de fixation **20,** depuis une première extrémité **24a** du corps pivotant **24.** Autrement dit, le levier de freinage **26** s'étend perpendiculairement au corps pivotant **24** depuis la première extrémité **24a** du corps pivotant.

En particulier, le levier de freinage **26** s'étend sensiblement parallèlement à la poignée de préhension **14,** selon sensiblement toute la longueur de cette dernière.

Compte tenu de ce qui précède, on comprend que l'axe de pivotement **Y**, l'axe **X** du manchon de fixation **20,** l'axe longitudinal de la poignée de préhension **14** et le levier de freinage **26** sont sensiblement parallèles.

La première extrémité **24a** du corps pivotant **24** est disposée à l'opposé d'une seconde extrémité **24b** du corps pivotant, qui est montée en liaison pivot avec le support **18,** autour de l'axe de pivotement **Y.** A cet effet, la seconde extrémité du corps pivotant comprend une paire d'ailes **28, 30** qui sont disposées de part et d'autre de la largeur de la portion coudée **18c** du support **18.**

Les deux ailes **28, 30** entourent une portion du support qui s'étend entre la portion coudée **18c** et la seconde extrémité **18b** du support. Les extrémités des deux ailes **28, 30** présentent chacune un orifice recevant un arbre **32** qui traverse la portion coudée **18c** du support **18** afin de réaliser la liaison pivot entre le corps pivotant **24** et le support **18.**

Comme on peut le voir sur la figure **2****,** le corps pivotant **24** comporte, en outre, un organe de guidage **34** du câble de frein **C** dans le corps pivotant. L'organe de guidage **34** présente une forme sensiblement cylindrique et s'étend selon un axe de guidage **Z,** depuis une portion du corps pivotant située entre la première extrémité **24a** du corps pivotant **24** et la seconde extrémité **24b** du corps pivotant **24.** Plus précisément, considéré dans le plan **P** perpendiculaire à l'axe de pivotement, l'organe de guidage **34** est disposé entre l'axe de pivotement **Y** et le levier de freinage **26.**

Par ailleurs, considéré dans le plan **P** perpendiculaire à l'axe de pivotement **Y** et en projection sur un axe passant par l'axe de pivotement **Y** et l'axe **X** du manchon de fixation **20,** l'organe de guidage **34** est disposé entre l'axe de pivotement **Y** et l'axe **X** du manchon de fixation **20.**

Selon l'invention, l'axe de guidage **Z** de l'organe de guidage **34** s'étend transversalement par rapport à un plan perpendiculaire à l'axe de pivotement **Y.** En particulier, le levier de freinage **26** et l'organe de guidage **34** s'étendent de part et d'autre du support **18,** dans des directions opposées.

En d'autres mots, l'organe de guidage **34** est compris dans un volume délimité par le manchon de fixation **20,** l'axe de pivotement **Y** et la seconde extrémité **18b** du support **18** et s'étendant le long du tube **16** du guidon **12,** ledit volume définissant sensiblement un prisme à base triangulaire. Un intérêt est de réduire l'encombrement causé par l'organe de guidage **34** et notamment d'éviter qu'il ne fasse saillie vers l'avant du véhicule. En particulier, cette configuration permet d'augmenter les dimensions de l'organe de guidage **34** sans nuire à l'ergonomie du dispositif de freinage **10.**

Dans cet exemple, l'angle saillant entre l'axe de guidage et le plan **P** perpendiculaire à l'axe de pivotement est de l'ordre de 60°.

Dans cet exemple non limitatif, l'organe de guidage comprend une molette de réglage de la tension du câble de frein **C.**

Par ailleurs, le corps pivotant **24** comporte une gorge intérieure **36,** comprenant une entrée de gorge **36a,** une sortie de gorge **36b,** une paroi latérale **38,** de préférence lisse, la gorge intérieure **36** permettant de guider le câble de frein dans le corps pivotant. La gorge intérieure **36** s'étend depuis l'organe de guidage **34,** au niveau de l'entrée de gorge **36a** et débouche dans la cavité d'accueil **19** du support **18,** au niveau de la sortie de gorge **36b.** En particulier, la gorge intérieure **36** décrit une courbure définie entre l'entrée de gorge **36a** et la sortie de gorge **36b** de l'ordre de 125° selon un premier mode de réalisation, et une courbure de l'ordre de 120° selon un second mode de réalisation. La section transversale de la gorge intérieure **36** est croissante depuis l'organe de guidage **34** vers la cavité d'accueil **19** et donc depuis l'entrée de gorge **36a** vers la sortie de gorge **36b.** De préférence, la section transversale de la gorge intérieure **36,** au niveau de la sortie de gorge **36b,** est deux fois plus grande, encore de préférence trois fois plus grande que la section transversale de la gorge intérieure au niveau de l'entrée de gorge **36a.**

Sur la figure **3****,** on constate que la cavité d'accueil **19** de la tête **Ca** du câble de frein **C** débouche dans une surface extérieure **40** du support **18** et est donc orientée vers une direction opposée au manchon de fixation **20.** La cavité d'accueil **19** est disposée entre la portion coudée **18c** du support et la seconde extrémité **18b** du support.

Selon le premier mode de réalisation, la distance entre l'axe de pivotement **Y** et la cavité d'accueil **19** est sensiblement égale à 22mm et la distance entre l'axe de pivotement et l'organe de guidage **34** est sensiblement égale à 18mm. Selon le second mode de réalisation, la distance entre l'axe de pivotement **Y** et la cavité d'accueil **19** est sensiblement égale à 32mm et la distance entre l'axe de pivotement et l'organe de guidage **34** est sensiblement égale à 27mm.

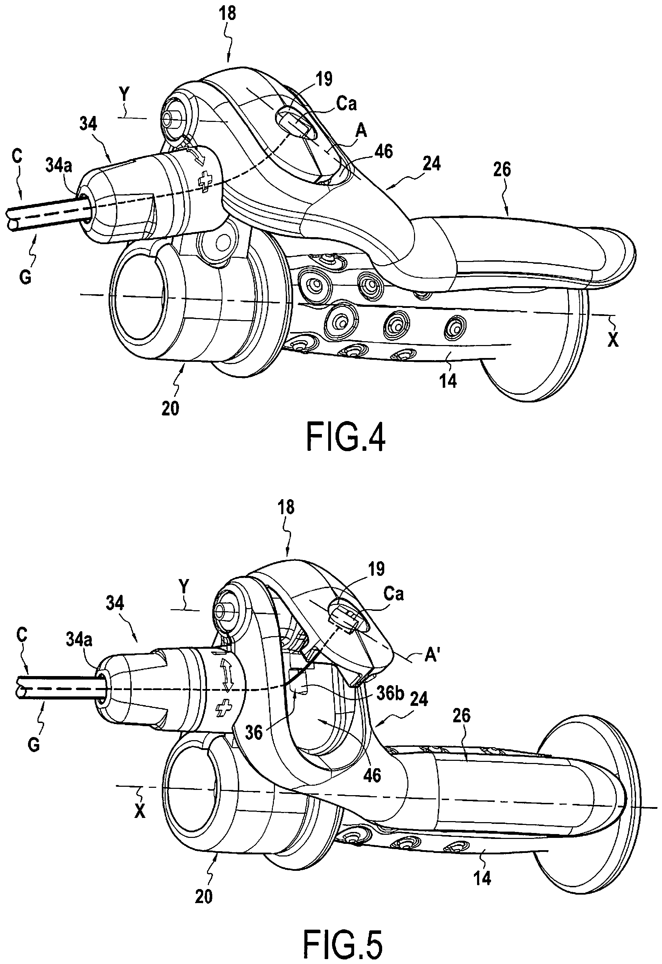

La cavité d'accueil comporte en outre une paroi de fond **42** ayant une forme partiellement cylindrique, de préférence ayant la forme d'un demi-cylindre. La paroi de fond **42** constitue une surface d'appui pour la tête **Ca** du câble de frein **C,** orientée vers une direction opposée au manchon de fixation **20.** La paroi de fond **42** présente un axe **A** défini comme l'axe du cylindre partiellement formé. De manière particulièrement avantageuse, la cavité d'accueil est configurée de sorte que l'axe **A** de la paroi de fond **42** de la cavité d'accueil **19** est incliné par rapport à l'axe de pivotement **Y,** de préférence d'un angle **α** compris entre 35° et 55°, encore de préférence d'un angle **α** sensiblement égal à 45°. Le support **18** comprend par ailleurs une fente **44** traversant le support et débouchant dans la cavité d'accueil. Dans l'exemple des figures **4** et **5****,** on constate que la tête **Ca** du câble de frein **C** présente la forme d'un cylindre ayant un axe **A',** coopérant avec la paroi de fond **42** de la cavité d'accueil **19.** La cavité d'accueil est configurée de sorte que la paroi de fond **42** permet de maintenir la tête **Ca** du câble de frein **C** en appui dans le support **18,** dans une direction opposée au manchon de fixation **20.** L'axe **A** de la paroi de fond **42** de la cavité d'accueil **19** étant incliné par rapport à l'axe de pivotement, on comprend que l'axe **A'** de la tête **Ca** du câble de frein **C** est sensiblement confondu avec l'axe **A** de la paroi de fond **42,** de sorte que l'axe **A'** de la tête du câble de frein est également incliné par rapport à l'axe de pivotement **Y.**

Par conséquent, cette configuration autorise le pivotement de la tête du câble de frein dans la cavité d'accueil **19** autour de l'axe **A** de la paroi de fond **42,** permettant une rotation du câble de frein **C,** selon l'axe **A** de la paroi de fond, lors de l'actionnement du levier de freinage **26,** ledit câble de frein étant guidé en rotation dans la fente **44** du support **18.**

Le câble de frein **C** traverse la fente **44** et s'étend sensiblement en direction du manchon de fixation **20,** de manière transversale à l'axe **X** du manchon de fixation **20.**

Le câble de frein traverse également le corps pivotant **24.** Plus précisément, le câble de frein **C** s'étend dans le corps pivotant au sein de la gorge intérieure **36,** en appui tangentiel sur la paroi latérale **38** de la gorge intérieure **36,** ainsi qu'à travers l'organe de guidage **34,** qui permet de guider le câble de frein **C.** Le câble de frein **C** entre dans le corps pivotant **24** au niveau d'une première extrémité **34a** de l'organe de guidage **34** et en sort au niveau de la sortie de gorge **36b.**

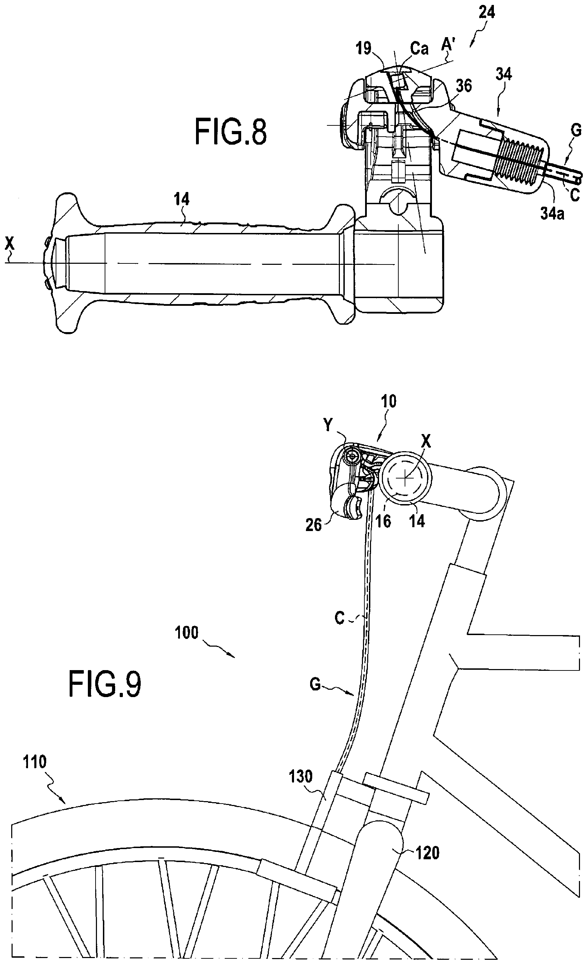

Comme illustré en figure **8****,** Le câble de frein **C** présente, dans le corps pivotant **24,** une courbure d'un angle supérieur à 90° entre la cavité d'accueil **19** et l'organe de guidage **34,** de préférence un angle compris entre 90° et 130°, ce qui permet de limiter les frottements du câble de frein **C** dans le corps pivotant **24.**

Par ailleurs, l'organe de guidage **34** et le levier de freinage **26** s'étendent de part et d'autre du support **18,** de sorte que le câble de frein **C** et la poignée de préhension **14** s'étendent dans des directions opposées. On comprend qu'il n'existe pas de risque que l'utilisateur soit gêné par le câble de frein **C** lorsqu'il souhaite actionner le levier de freinage.

En outre, le câble de frein **C,** hors du dispositif de freinage **10,** s'étend de façon connue dans une gaine **G.** La première extrémité de ladite gaine **G** est logée dans l'organe de guidage **34,** tandis que la deuxième extrémité de la gaine **G** est fixée au corps d'un étrier de frein. La deuxième extrémité du câble de frein **C** est également reliée, de façon connue, à une partie mobile de l'étrier de frein, mobile par rapport au corps de l'étrier de frein.

Les figures **4** et **6** illustrent un dispositif de freinage **10** selon l'invention, en position de repos, dans lequel le levier de freinage **26** n'est pas actionné. Le corps pivotant **24** comporte un logement **46** destiné à coopérer avec le support **18,** en accueillant une portion du support qui s'étend entre la portion coudée **18c** et la seconde extrémité **18b** du support **18.**

Dans cette position de repos du dispositif de freinage **10,** le câble de frein **C** s'étend dans la gorge **36** du corps pivotant **24,** en appui tangentiel sur la paroi latéral **38,** à proximité d'une paroi inférieure **48** de la gorge **36.**

Lorsque l'on actionne le levier de freinage, c'est-à-dire lorsque l'on fait passer le dispositif de freinage **10** de la position de repos représentée sur les figures **4** et **6** à une position actionnée représentée sur les figures **5** et **7****,** le corps pivotant **24** pivote autour de l'axe de pivotement **Y,** ce qui entraîne le déplacement de l'organe de guidage **34** en rotation autour de l'axe de pivotement **Y.** A la suite de quoi, l'organe de guidage se rapproche du manchon de fixation **20** et pousse sur la gaine **G,** tandis que la tête **Ca** du câble de frein **C** est maintenue dans la cavité d'accueil **19.** L'actionnement du levier de freinage **26** a donc pour effet de pousser la gaine **G** de façon à ce que le câble de frein **C** se déplace par rapport à la gaine **G.** Il s'ensuit que la deuxième extrémité du câble de frein se déplace vers la deuxième extrémité de la gaine, opérant alors une traction sur la partie mobile de l'étrier de frein.

De préférence, la course angulaire du corps pivotant **24** autour de l'axe de pivotement **Y,** entre la position de repos du dispositif de freinage **10** et la position actionnée du dispositif de freinage **10,** est inférieure à 90°, encore de préférence inférieure à 45°.

Durant l'actionnement du levier de freinage **26,** le câble de frein **C** glisse dans la gorge intérieure **36** du corps pivotant **24** et se rapproche d'une paroi supérieure **50** de la gorge intérieure **36.** Dans le même temps, la tête **Ca** du câble de frein **C** pivote autour de l'axe **A** de la paroi de fond **42** de la cavité d'accueil **19,** de sorte que le câble de frein est guidé dans la fente **44.** En guidant le câble de frein **C** de la sorte, ce dernier glisse dans la gorge intérieure **36** du corps pivotant **24,** du bas vers le haut et de manière tangentielle à la paroi latérale **38** de la gorge intérieure **36,** durant tout l'actionnement du levier de freinage **26.**

Autrement dit, grâce à l'inclinaison de l'axe **A** de la paroi de fond **42** de la cavité d'accueil **19,** et donc grâce à l'inclinaison de la tête **Ca** du câble de frein **C** par rapport à l'axe de pivotement **Y,** le câble de frein conserve une incidence tangentielle avec la paroi latérale **38** de la gorge intérieure **36,** quelle que soit la position du levier de freinage **26.** Le câble de frein glisse de manière tangentielle le long de la paroi latérale **38** de la gorge intérieure **36.** Cette configuration améliore le guidage du câble de frein **C** dans le corps pivotant **24** et permet d'éviter une torsion du câble de frein, ce qui limite les frottements et facilite le freinage du véhicule.

Les figures **5** et **7** illustrent le dispositif de freinage selon l'invention en position actionnée, c'est-à-dire pour lequel le levier de freinage **26** a été actionné. L'organe de guidage **34** est positionné à proximité du manchon de fixation **20.** On constate que le câble de frein **C** est toujours en appui tangentiel sur la paroi latérale **38** de la gorge intérieure **36,** à proximité de la paroi supérieure **50** de la gorge intérieure **36.**

Par ailleurs, pour permettre le passage de la position actionnée vers la position de repos, le dispositif de freinage **10** comporte un ressort de rappel **52** qui est monté entre le support **18** et le corps pivotant **24.**

La figure **8** est une vue en coupe, de dessous, présentant le cheminement du câble de frein **C** depuis l'organe de guidage **34,** dans la gorge intérieure **36** et à travers la fente **44** du support **18.** On constate que le câble de frein décrit un arc de cercle ayant une courbure douce de sorte que le freinage est amélioré.

Sur la figure **9****,** on a illustré un véhicule **100** à roues comportant un dispositif de freinage **10** selon l'invention. Dans cet exemple non limitatif, le véhicule **100** est un vélo. Sans sortir du cadre de l'invention, le véhicule **100** pourrait être un deux-roues motorisé ou encore une trottinette.

Le dispositif de freinage **10** est monté sur le tube **16** du guidon **12** du véhicule **100.** Ce dernier comporte au moins une roue **110** fixée à un cadre **120** et un frein **130** qui est associé à ladite roue pour la freiner et qui est relié au dispositif de freinage **10** par l'intermédiaire du câble de frein **C,** se déplaçant par rapport à la gaine **G.** En particulier, la première extrémité de la gaine est logée dans l'organe de guidage **34,** tandis que la deuxième extrémité de la gaine est fixée au corps de l'étrier du frein **130.** La deuxième extrémité du câble de frein est également reliée à l'étrier du frein **130.**

## Revendications

1. Dispositif de freinage (10) pour un véhicule comportant un guidon ayant un axe et un câble de frein (C) ayant une tête (Ca), ledit dispositif de freinage comportant :
• un support (18) présentant une première extrémité (18a) munie d'un manchon de fixation (20) au guidon, le manchon de fixation ayant un axe (X), et une seconde extrémité (18b) ; et
• un corps pivotant (24) monté au support de manière pivotante autour d'un axe de pivotement (Y) qui est sensiblement parallèle à l'axe (X) du manchon de fixation (20), le corps pivotant comportant un levier de freinage (26) s'étendant sensiblement parallèlement à l'axe du manchon de fixation ;
ledit dispositif de freinage (10) étant **caractérisé en ce que** le corps pivotant (24) comporte en outre un organe de guidage (34) de l'entrée du câble de frein dans le corps pivotant, ledit organe de guidage s'étendant selon un axe (Z) transversal à un plan (P) perpendiculaire à l'axe de pivotement, **en ce que** la seconde extrémité (18b) du support (18) comporte une cavité d'accueil (19) pour la tête (Ca) du câble de frein, et **en ce que** l'organe de guidage (34) et le levier de freinage (26) s'étendent de part et d'autre du support.

2. Dispositif de freinage selon la revendication 1, dans lequel l'organe de guidage (34) et le levier de freinage (26) sont disposés de part et d'autre d'un plan (P) perpendiculaire à l'axe du manchon de fixation et passant par la cavité d'accueil.

3. Dispositif de freinage selon la revendication 1 ou 2, dans lequel le support présente une portion coudée (18c) formée entre la première extrémité (18a) du support et la seconde extrémité (18b) du support, et dans lequel la portion coudée est traversée par l'axe de pivotement (Y).

4. Dispositif de freinage selon l'une quelconque des revendications 1 à 3, dans lequel le support (18) comprend une surface extérieure (40) et dans lequel la cavité d'accueil (19) débouche dans la surface extérieure du support.

5. Dispositif de freinage selon l'une quelconque des revendications 1 à 4, dans lequel le manchon de fixation (20) et la cavité d'accueil (19) sont disposés de part et d'autre d'un plan contenant l'axe de pivotement (Y) et traversant l'organe de guidage (34).

6. Dispositif de freinage selon la revendication 5, dans lequel la cavité d'accueil (19) est conformée de sorte que le câble de frein présente, entre la cavité d'accueil et l'organe de guidage (34), une courbure d'un angle supérieur à 90° dans le corps pivotant (24).

7. Dispositif de freinage selon l'une quelconque des revendications 1 à 6, dans lequel la cavité d'accueil (19) comporte une paroi de fond (42) ayant une forme partiellement cylindrique présentant un axe (A), la paroi de fond étant configurée pour recevoir la tête (Ca) du câble de frein.

8. Dispositif de freinage selon la revendication 7, dans lequel l'axe (A) de la paroi de fond (42) de la cavité d'accueil est incliné par rapport à l'axe de pivotement (Y).

9. Dispositif de freinage selon l'une quelconque des revendications 1 à 8, dans lequel, considéré dans un plan perpendiculaire à l'axe de pivotement, l'organe de guidage est disposé entre l'axe de pivotement (Y) et l'axe (X) du manchon de fixation (20).

10. Dispositif de freinage selon la revendication 9, dans lequel, considéré dans ledit plan perpendiculaire à l'axe de pivotement (Y), l'organe de guidage (34) est disposé entre l'axe de pivotement et le levier de freinage (26).

11. Dispositif de freinage selon l'une quelconque des revendications 1 à 10, dans lequel l'angle saillant entre l'axe de guidage et le plan perpendiculaire à l'axe de pivotement est compris entre 45° et 90°.

12. Dispositif de freinage selon l'une quelconque des revendications 1 à 11, dans lequel l'organe de guidage (34) comprend une molette de réglage de la tension du câble de frein.

13. Dispositif de freinage selon l'une quelconque des revendications 1 à 12, dans lequel le corps pivotant comporte une gorge intérieure (36) pour guider le câble de frein s'étendant entre la cavité d'accueil (19) et l'organe de guidage (34).

14. Dispositif de freinage selon la revendication 13, dans lequel la section transversale de ladite gorge intérieure (36) est croissante depuis l'organe de guidage, vers la cavité d'accueil (19).

15. Dispositif de freinage selon l'une quelconque des revendications 1 à 14, dans lequel un ressort de rappel (52) est monté entre le support (18) et le corps pivotant (24), agencé de manière à ramener le dispositif de freinage (10) en une position de repos lorsque le levier de freinage (26) n'est pas actionné.

16. Véhicule à roues ayant au moins une roue fixée à un cadre comprenant un guidon et au moins un frein associé à ladite roue et actionnable par un câble de frein (C) ayant une tête (Ca), ledit câble de frein étant disposé à l'intérieur d'une gaine (G), ledit véhicule comportant en outre un dispositif de freinage selon l'une quelconque des revendications 1 à 15, le câble de frein traversant l'organe de guidage (34) et la tête du câble de frein étant disposée dans la cavité d'accueil (19), une première extrémité de la gaine étant logée dans l'organe de guidage tandis qu'une deuxième extrémité de la gaine est fixée au frein.

## Patentansprüche

1. Bremsvorrichtung (10) für ein Fahrzeug, umfassend einen Lenker, der eine Achse und ein Bremskabel (C) aufweist, das einen Kopf (Ca) aufweist, wobei die Bremsvorrichtung aufweist:
• einen Träger (18), der ein erstes Ende (18a), das mit einer Befestigungsmanschette (20) an dem Lenker versehen ist, wobei die Befestigungsmanschette eine Achse (X) aufweist, und ein zweites Ende (18b) aufweist, und
• einen Schwenkkörper (24), der an dem Träger schwenkbar um eine Schwenkachse (Y) befestigt ist, die im Wesentlichen parallel zu der Achse (X) der Befestigungsmanschette (20) ist, wobei der Schwenkkörper einen Bremshebel (26) aufweist, der sich im Wesentlichen parallel zu der Achse der Befestigungsmanschette erstreckt,
wobei die Bremsvorrichtung (10) **dadurch gekennzeichnet ist, dass** der Schwenkkörper (24) ferner ein Führungsorgan (34) des Eingangs des Bremskabels in den Schwenkkörper aufweist, wobei sich das Führungsorgan entlang einer Achse (Z) quer zu einer Ebene (P) erstreckt, die senkrecht zu der Schwenkachse ist, dadurch, dass das zweite Ende (18b) des Trägers (18) einen Aufnahmehohlraum (19) für den Kopf (Ca) des Bremskabels aufweist und dadurch, dass sich das Führungsorgan (34) und der Bremshebel (26) beiderseits des Trägers erstrecken.

2. Bremsvorrichtung gemäß Anspruch 1, wobei das Führungsorgan (34) und der Bremshebel (26) auf beiden Seiten einer Ebene (P) angeordnet sind, die senkrecht zu der Achse der Befestigungsmanschette verläuft, und durch den Aufnahmehohlraum hindurchgehen.

3. Bremsvorrichtung gemäß Anspruch 1 oder 2, wobei der Träger einen gebogenen Abschnitt (18c) aufweist, der zwischen dem ersten Ende (18a) des Trägers und dem zweiten Ende (18b) des Trägers gebildet ist, und wobei der gebogene Abschnitt von der Schwenkachse (Y) durchquert ist.

4. Bremsvorrichtung gemäß einem der Ansprüche 1 bis 3, wobei der Träger (18) eine Außenoberfläche (40) aufweist und wobei der Aufnahmehohlraum (19) in die Außenoberfläche des Trägers mündet.

5. Bremsvorrichtung gemäß einem der Ansprüche 1 bis 4, wobei die Befestigungsmanschette (20) und der Aufnahmehohlraum (19) auf beiden Seiten einer Ebene angeordnet sind, die die Schwenkachse (Y) enthält und die das Führungsorgan (34) durchquert.

6. Bremsvorrichtung gemäß Anspruch 5, wobei der Aufnahmehohlraum (19) derart ausgebildet ist, dass das Bremskabel zwischen dem Aufnahmehohlraum und dem Führungsorgan (34) eine Krümmung mit einem Winkel, der größer als 90° ist, in dem Schwenkkörper (24) aufweist.

7. Bremsvorrichtung gemäß einem der Ansprüche 1 bis 6, wobei der Aufnahmehohlraum (19) eine Rückwand (42) aufweist, die eine teilweise zylindrische Form aufweist, die eine Achse (A) aufweist, wobei die Rückwand konfiguriert ist, um den Kopf (Ca) des Bremskabels aufzunehmen.

8. Bremsvorrichtung gemäß Anspruch 7, wobei die Achse (A) der Rückwand (42) des Aufnahmehohlraums in Bezug auf die Schwenkachse (Y) geneigt ist.

9. Bremsvorrichtung gemäß einem der Ansprüche 1 bis 8, wobei das Führungsorgan in einer Ebene senkrecht zur Schwenkachse betrachtet zwischen der Schwenkachse (Y) und der Achse (X) der Befestigungsmanschette (20) angeordnet ist.

10. Bremsvorrichtung gemäß Anspruch 9, wobei das Führungsorgan (34) in einer Ebene senkrecht zur Schwenkachse (Y) betrachtet zwischen der Schwenkachse und der Bremshebel (26) angeordnet ist.

11. Bremsvorrichtung gemäß einem der Ansprüche 1 bis 10, wobei der vorspringende Winkel zwischen der Führungsachse und der Ebene, die senkrecht zur Schwenkachse ist, zwischen 45° und 90° beträgt.

12. Bremsvorrichtung gemäß einem der Ansprüche 1 bis 11, wobei das Führungsorgan (34) ein Rädchen zum Einstellen der Spannung des Bremskabels aufweist.

13. Bremsvorrichtung gemäß einem der Ansprüche 1 bis 12, wobei der Schwenkkörper eine Innennut (36) aufweist, um das Bremskabel, das sich zwischen dem Aufnahmehohlraum (19) und dem Führungsorgan (34) erstreckt, zu führen.

14. Bremsvorrichtung gemäß Anspruch 13, wobei der Querschnitt der Innennut (36) von dem Führungsorgan zum Aufnahmehohlraum (19) zunehmend ist.

15. Bremsvorrichtung gemäß einem der Ansprüche 1 bis 14, wobei eine Rückstellfeder (52) zwischen dem Träger (18) und dem Schwenkkörper (24) befestigt ist, die derart ausgebildet ist, um die Bremsvorrichtung (10) in eine Ruheposition zurückzubringen, wenn der Bremshebel (26) nicht betätigt wird.

16. Radfahrzeug, das mindestens ein Rad aufweist, das an einem Rahmen befestigt ist, der einen Lenker und mindestens eine Bremse aufweist, die mit dem Rad zugeordnet ist und durch ein Bremskabel (C), das einen Kopf (Ca) aufweist, betätigt werden kann, wobei das Bremskabel im Inneren einer Hülse (G) angeordnet ist, wobei das Fahrzeug ferner eine Bremsvorrichtung gemäß einem der Ansprüche 1 bis 15 aufweist, wobei das Bremskabel das Führungsorgan (34) durchquert und der Kopf des Bremskabels in dem Aufnahmehohlraum (19) angeordnet ist, wobei ein erstes Ende der Hülse in dem Führungsorgan angeordnet ist, während ein zweites Ende der Hülse an der Bremse befestigt ist.

## Claims

1. A braking device (10) for a vehicle having a handlebar with an axis and a brake cable (C) with a nipple (Ca), said braking device comprising:
• a support (18) presenting both a first end (18a) provided with a fastener sleeve (20) for fastening to the handlebar, the fastener sleeve having an axis (X), and also a second end (18b); and
• a pivot body (24) mounted on the support so as to pivot about a pivot axis (Y) that is substantially parallel to the axis (X) of the fastener sleeve (20), the pivot body including a brake handle (26) extending substantially parallel to the axis of the fastener sleeve;
said braking device (10) being **characterized in that** the pivot body (24) also includes a guide member (34) for guiding the brake cable into the pivot body, said guide member extending along an axis (Z) that is transverse to a plane (P) that is perpendicular to the pivot axis, **in that** the second end (18b) of the support (18) includes a receiving cavity (19) for receiving the nipple (Ca) of the brake cable, and **in that** the guide member (34) and the brake handle (26) extend on opposite sides of the support.

2. A braking device according to claim 1, wherein the guide member (34) and the brake handle (26) are located on opposite sides of a plane (P) that is perpendicular to the axis of the fastener sleeve and that passes via the receiving cavity.

3. A braking device according to claim 1 or claim 2, wherein the support presents a bend portion (18c) formed between the first end (18a) of the support and the second end (18b) of the support, and wherein the pivot axis (Y) passes through the bend portion.

4. A braking device according to any one of claims 1 to 3, wherein the support (18) includes an outer surface (40) and wherein the receiving cavity (19) opens out into the outside surface of the support.

5. A braking device according to any one of claims 1 to 4, wherein the fastener sleeve (20) and the receiving cavity (19) are located on opposite sides of a plane containing the pivot axis (Y) and passing through the guide member (34).

6. A braking device according to claim 5, wherein the receiving cavity (19) is shaped in such a manner that, between the receiving cavity and the guide member (34), the brake cable presents a curve through an angle that is greater than 90° inside the pivot body (24).

7. A braking device according to any one of claims 1 to 6, wherein the receiving cavity (19) includes an end wall (42) of partly cylindrical shape presenting an axis (A), the end wall being configured to receive the nipple (Ca) of the brake cable.

8. A braking device according to claim 7, wherein the axis (A) of the end wall (42) of the receiving cavity is inclined relative to the pivot axis (Y).

9. A braking device according to any one of claims 1 to 8, wherein, when considered in a plane that is perpendicular to the pivot axis, the guide member is located between the pivot axis (Y) and the axis (X) of the fastener sleeve (20).

10. A braking device according to claim 9, wherein, when considered in said plane that is perpendicular to the pivot axis (Y), the guide member (34) is located between the pivot axis and the brake handle (26).

11. A braking device according to any one of claims 1 to 10, wherein the salient angle between the guide axis and the plane that is perpendicular to the pivot axis lies in the range 45° to 90°.

12. A braking device according to any one of claims 1 to 11, wherein the guide member (34) includes a thumbwheel for adjusting the tension of the brake cable.

13. A braking device according to any one of claims 1 to 12, wherein the pivot body includes an inner recess (36) for guiding the brake cable extending between the receiving cavity (19) and the guide member (34).

14. A braking device according to claim 13, wherein the cross-section of said inner recess (36) increases going from the guide member towards the receiving cavity (19).

15. A braking device according to any one of claims 1 to 14, wherein a return spring (52) is mounted between the support (18) and the pivot body (24), and arranged so as to return the braking device (10) to a rest position when the brake handle (26) is not actuated.

16. A wheeled vehicle having at least one wheel secured to a frame including a handlebar and at least one brake associated with said wheel and actuatable via a brake cable (C) having a nipple (Ca), said brake cable being located inside a sheath (G), said vehicle further including a braking device according to any one of claims 1 to 15, the brake cable passing through the guide member (34) and the nipple of the brake cable being located in the receiving cavity (19), a first end of the sheath being housed in the guide member while a second end of the sheath is fastened to the brake.
